(19) Europäisches Patentamt
European Patent Office
Office européen des brevets

(11) Veröffentlichungsnummer: **0 073 959**
**B1**

(12) # EUROPÄISCHE PATENTSCHRIFT

(45) Veröffentlichungstag der Patentschrift: **17.04.85**

(51) Int. Cl.⁴: **C 09 B 29/01** // D06P1/06

(21) Anmeldenummer: **82107416.8**

(22) Anmeldetag: **16.08.82**

(54) **Saure Monoazofarbstoffe sowie deren Verwendung zum Färben von Polyamiden.**

(30) Priorität. **27.08.81 DE 3133919**

(43) Veröffentlichungstag der Anmeldung: **16.03.83 Patentblatt 83/11**

(45) Bekanntmachung des Hinweises auf die Patenterteilung: **17.04.85 Patentblatt 85/16**

(84) Benannte Vertragsstaaten: **CH DE FR GB LI**

(56) Entgegenhaltungen:
**FR - A - 2 161 112**
**FR - A - 2 162 193**
**FR - A - 2 438 071**
**GB - A - 837 750**
**GB - A - 912 127**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Hugl, Herbert, Dr., Gemarkenweg 9, D-5060 Bergisch-Gladbach 2 (DE)**
Erfinder: **Wolfrum, Gerhard, Dr., Domblick 17, D-5090 Leverkusen 31 (DE)**
Erfinder: **Heidenreich, Holger, Dr., Andreas-Gryphius-Strasse 22, D-5000 Koeln 80 (DE)**

**EP 0 073 959 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der Erfindung sind Azofarbstoffe, die in Form der freien Säuren der Formel

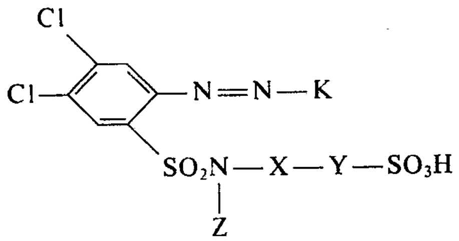

(I)

entsprechen, worin

K für einen der Reste

a) 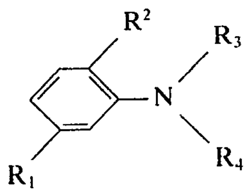

b) 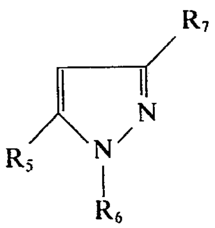

c) 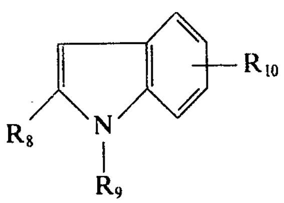

steht, in denen

$R_1$ = H, $CH_3$, Cl, $NHCOCH_3$ oder $NHSO_2CH_3$,
$R_2$ = H, $OCH_3$ oder Cl,
$R_3$ = $C_2$—$C_4$-Alkyl, $C_2$—$C_4$-Hydroxyalkyl, Cyanethyl, $C_2H_4$—O—Q, Benzyl oder Phenethyl,
Q = $C_1$—$C_4$-Alkyl, Phenyl oder Cyclohexyl,
$R_4$ = H oder $R_3$,
$R_5$ = OH oder $NH_2$,
$R_6$ = $C_1$—$C_4$-Alkyl, gegebenenfalls substituiertes Phenyl, Benzyl oder Phenylethyl,
$R_7$ = $CH_3$,
$R_8$ = $C_1$—$C_4$-Alkyl oder Phenyl,
$R_9$ = H oder $C_1$—$C_4$-Alkyl,
$R_{10}$ = H,
X = $C_2$—$C_4$-Alkylen,
Y = direkte Bindung,
Z = H, $CH_3$ oder $C_2H_5$

bedeuten.

Diese Farbstoffe können selbstverständlich auch in Form ihrer Salze, insbesondere ihrer Alkalisalze, vorliegen.

Besonders bevorzugt sind Farbstoffe der Formel Ia—Ic, worin

$R_1$ = H oder $CH_3$,
$R_2$ = H,

$R_3$ = $C_2H_5$, $C_2H_4OH$, $C_2H_4CN$, Benzyl, Phenethyl oder $C_2H_4OQ$,
$R_4$ = $R_3$ oder H,
$R_5$ = $NH_2$,
$R_6$ = $C_1-C_4$-Alkyl oder Phenyl,
$R_7$ = $CH_3$,
$R_8$ = $CH_3$ oder Phenyl,
$R_9$ = H, $CH_3$ oder $C_2H_5$,
$R_{10}$ = H,
X = $-C_2H_4-$,
Y = direkte Bindung,
Z = H

bedeuten.

Die neuen Farbstoffe werden in an sich bekannter Weise, z. B. durch Diazotieren eines entsprechenden Dichloranilins und Kuppeln auf eine entsprechende Kupplungskomponente hergestellt.

Die Diazokomponenten sind neu. Man erhält sie aber in an sich bekannter Weise durch Umsetzung von 3,4-Dichloranilin mit Chlorsulfonsäure — gegebenenfalls in Gegenwart eines anorganischen Säurechlorids (z. B. $SOCl_2$ oder $POCl_3$) — zum 3,4-Dichloranilin-6-sulfochlorid und anschließende Behandlung mit einem Amin der Formel

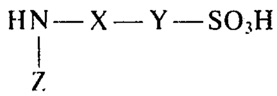

Die Kupplungskomponenten sind durchweg bekannt und beispielsweise in folgender Patentliteratur beschrieben:

US-PS 4 048 154, 4 231 748, 4 248 774, 4 055 557, 4 000 124, 3 891 619, 3 657 220 und 3 842 263 sowie
GP-PS 1 325 147 und 1 384 472.

Die neuen Farbstoffe eignen sich zum Färben von amidgruppenhaltigen Fasern, wie z. B. Wolle, Seide und vor allem synthetischen Polyamiden. Die erhaltenen Färbungen zeichnen sich durch hervorragende anwendungstechnische Eigenschaften, insbesondere durch ein gutes Migriervermögen und hohe Lichtechtheit aus.

Von den konstitutionell nächstvergleichbaren Farbstoffen der FR-A 2 161 112, 2 162 193 und 2 438 071 unterscheiden sich die erfindungsgemäßen Farbstoffe durch die charakteristische 3,4-Position der Chloratome und/oder den Taurinrest in ortho-Stellung zur Azobrücke in der Diazokomponente.

## Beispiel 1

34,9 g 1-Amino-3,4-dichlor-6-(N-2-sulfoethyl)-aminosulfonylbenzol sowie 7,0 g Natriumnitrit werden bei pH 9 in 150 ml Wasser gelöst. Diese Lösung läßt man zu einer Mischung aus 200 g Eis und 40 ml 37%iger Salzsäure zulaufen. Man rührt 1 Stunde lang nach und zerstört dann den Nitritüberschuß mit Amidosulfonsäure. Danach gibt man eine Lösung aus 14,9 g N,N-Diethylanilin in 150 ml 10%iger Salzsäure zu und stumpft durch langsames Zutropfen von 10%iger Natronlauge bis pH 4 ab.

Nach dem Auskuppeln wird der Farbstoff der Formel

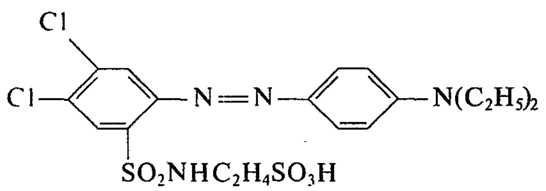

abgesaugt, gewaschen und getrocknet.

Er färbt Polyamidfasern in einem Orange-Farbton.

In entsprechender Weise erhält man die in der folgenden Tabelle (1) angegebenen Farbstoffe.

Tabelle (1):

Farbstoffe der Formel Ia

| Beispiel | X | Y | Z | $R_1$ | $R_2$ | $R_3$ | $R_4$ | Farbton |
|---|---|---|---|---|---|---|---|---|
| a | $C_2H_4$ | – | H | H | H | H | $C_2H_4OC_6H_5$ | Orange |
| b | $C_2H_4$ | – | H | H | H | $C_2H_5$ | $C_2H_4OC_6H_5$ | rotstichig Orange |
| c | $C_2H_4$ | – | H | $CH_3$ | H | $C_2H_5$ | $C_2H_4OC_6H_5$ | rotstichig Orange |
| d | $C_4H_8$ | – | H | H | H | $C_2H_4OH$ | $C_2H_4OH$ | Scharlach |
| e | $C_2H_4$ | – | $CH_3$ | H | H | $C_2H_4OC_6H_{11}$ | H | Orange |
| f | $C_2H_4$ | – | H | H | H | $C_2H_5$ | $C_2H_4OC_4H_3$ | Orange |
| g | $C_2H_4$ | – | H | H | H | $C_2H_5$ | $CH_2-C_6H_5$ | Orange |
| h | $C_2H_4$ | – | H | $CH_3$ | H | $C_2H_5$ | $C_2H_4-C_6H_5$ | Orange |

Beispiel 2

Man arbeitet wie in Beispiel 1, kuppelt jedoch auf 17,3 g 1-Phenyl-3-methyl-5-aminopyrazol in 60 ml HCl (37%ig), wobei der pH-Wert durch Zutropfen von Na-Acetat-Lösung bei 4 gehalten wird. Der resultierende Farbstoff färbt Polyamidfasern stark grünstichig gelb und entspricht der Formel

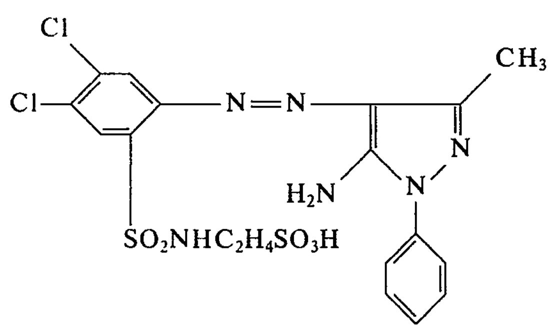

In entsprechender Weise erhält man die in folgender Tabelle (2) aufgeführten Farbstoffe.

Tabelle (2):

Farbstoffe der Formel Ib

| Beispiel | X | Y | Z | $R_5$ | $R_6$ | $R_7$ | Farbton |
|---|---|---|---|---|---|---|---|
| a | $C_2H_4$ | – | $CH_3$ | $NH_2$ | $C_6H_5$ | $CH_3$ | grünstichig Gelb |
| b | $C_2H_4$ | – | H | OH | $C_6H_5$ | $CH_3$ | Gelb |
| c | $C_2H_4$ | – | $C_2H_5$ | OH | 3-Cl–$C_6H_4$ | $CH_3$ | Gelb |

Beispiel 3

Man verfährt wie in Beispiel 1, kuppelt jedoch auf 13,1 g 2-Methylindol in 140 ml HCl (37%ig) bei pH 2. Man erhält einen gelben Farbstoff der Formel

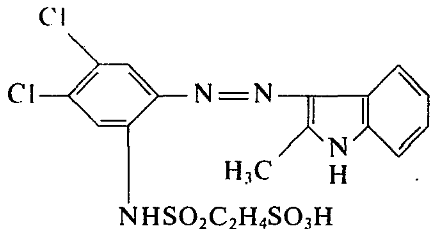

In entsprechender Weise erhält man die in folgender Tabelle (3) angegebenen Farbstoffe.

Tabelle (3):

Farbstoffe der Formel Ic

| Beispiel | X | Y | Z | $R_8$ | $R_9$ | $R_{10}$ | Farbton |
|---|---|---|---|---|---|---|---|
| a | $C_2H_4$ | – | H | $C_6H_5$ | H | H | Orange |
| b | $C_2H_4$ | – | H | $C_6H_5$ | $CH_3$ | H | Gelb |
| c | $C_2H_4$ | – | $CH_3$ | $CH_3$ | H | H | Gelb |
| d | $C_2H_4$ | – | H | $C_2H_5$ | $CH_3$ | H | Gelb |
| e | $C_2H_4$ | – | $C_2H_5$ | $CH_3$ | H | H | Gelb |
| f | $C_4H_8$ | – | H | $CH_3$ | H | H | Gelb |
| g | $C_2H_4$ | – | $CH_3$ | $C_6H_5$ | H | H | Orange |

**Patentansprüche**

1. Azofarbstoffe der Formel

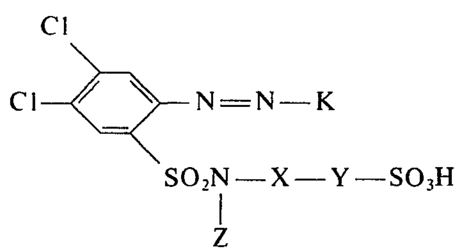

(I)

worin

K einen der Reste

a) 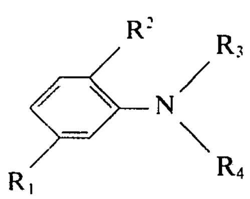

b) 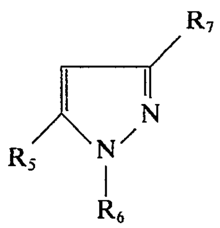

c) 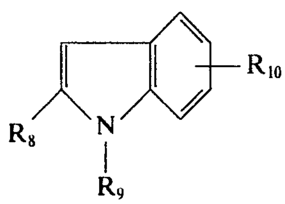

bedeutet, worin

$R_1$ = H, $CH_3$, Cl, $NHCOCH_3$ oder $NHSO_2CH_3$,
$R_2$ = H, $OCH_3$ oder Cl,
$R_3$ = $C_2$—$C_4$-Alkyl, $C_2$—$C_4$-Hydroxyalkyl, Cyanethyl, Benzyl, Phenethyl oder $C_2H_4$—O—Q,
Q = $C_1$—$C_4$-Alkyl, Phenyl oder Cyclohexyl,
$R_4$ = H oder $R_3$,
$R_5$ = OH oder $NH_2$,
$R_6$ = $C_1$—$C_4$-Alkyl, gegebenenfalls substituiertes Phenyl, Benzyl oder Phenylethyl,
$R_7$ = $CH_3$,
$R_8$ = $C_1$—$C_4$-Alkyl oder Phenyl,
$R_9$ = H oder $C_1$—$C_4$-Alkyl,
$R_{10}$ = H,
X = $C_2$—$C_4$-Alkylen,
Y = direkte Bindung,
Z = H, $CH_3$ oder $C_2H_5$.

2. Azofarbstoffe gemäß Anspruch 1, dadurch gekennzeichnet, daß

$R_1$ = H oder $CH_3$,
$R_2$ = H,
$R_3$ = $C_2H_5$, $C_2H_4OH$, $C_2H_4CN$, Benzyl, Phenethyl oder $C_2H_4OQ$,
$R_4$ = $R_3$ oder H,
$R_5$ = $NH_2$,
$R_6$ = $C_1$—$C_4$-Alkyl oder Phenyl,
$R_7$ = $CH_3$,
$R_8$ = $CH_3$ oder Phenyl,
$R_9$ = H, $CH_3$ oder $C_2H_5$,
$R_{10}$ = H,
X = $C_2H_4$,
Y = direkte Bindung,
Z = H.

3. Azofarbstoffe gemäß Anspruch 1 der Formel

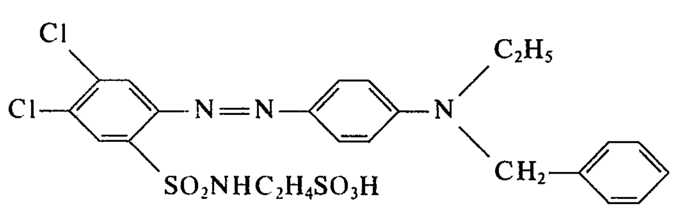

4. Azofarbstoff gemäß Anspruch 1 der Formel

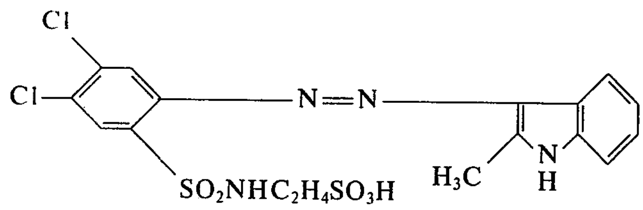

5. Verwendung der Farbstoffe gemäß Anspruch 1 zum Färben von Polyamidfasern.

**Claims**

1. Azo dyestuffs of the formula

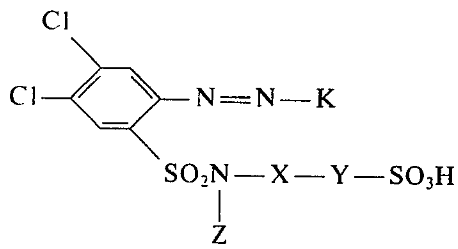

(I)

wherein

K denotes one of the radicals

a)

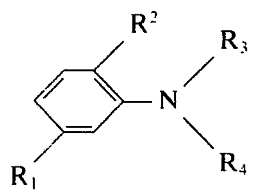

b)

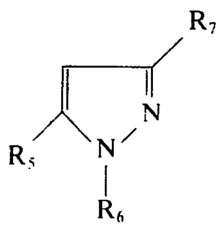

c)

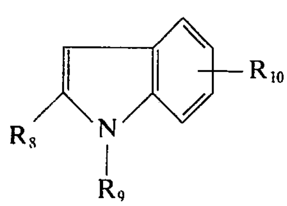

wherein

$R_1$ = H, $CH_3$, Cl, $NHCOCH_3$ or $NHSO_2CH_3$,
$R_2$ = H, $OCH_3$ or Cl,
$R_3$ = $C_2$–$C_4$-alkyl, $C_2$–$C_4$-hydroxyalkyl, cyanoethyl, benzyl, phenethyl or $C_2H_4$–O–Q,
Q = $C_1$–$C_4$-alkyl, phenyl or cyclohexyl,
$R_4$ = H or $R_3$,
$R_5$ = OH or $NH_2$,
$R_6$ = $C_1$–$C_4$-alkyl, optionally substituted phenyl, benzyl or phenylethyl,
$R_7$ = $CH_3$,
$R_8$ = $C_1$–$C_4$-alkyl or phenyl,

$R_9$ = H or $C_1$—$C_4$-Alkyl,
$R_{10}$ = H,
X = $C_2$—$C_4$-alkylene,
Y = a direct bond and
Z = H, $CH_3$ or $C_2H_5$.

2. Azo dyestuffs according to Claim 1, characterised in that

$R_1$ = H or $CH_3$,
$R_2$ = H,
$R_3$ = $C_2H_5$, $C_2H_4OH$, $C_2H_4CN$, benzyl, phenethyl or $C_2H_4OQ$,
$R_4$ = $R_3$ or H,
$R_5$ = $NH_2$,
$R_6$ = $C_1$—$C_4$-alkyl or Phenyl,
$R_7$ = $CH_3$,
$R_8$ = $CH_3$ or phenyl,
$R_9$ = H, $CH_3$ or $C_2H_5$,
$R_{10}$ = H,
X = $C_2H_4$,
Y = a direkt bond and
Z = H.

3. Azo dyestuff according to Claim 1, of the formula

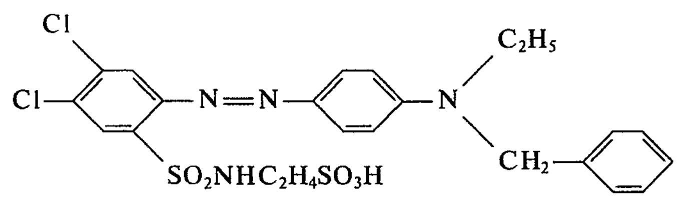

4. Azo dyestuff according to Claim 1 of the formula

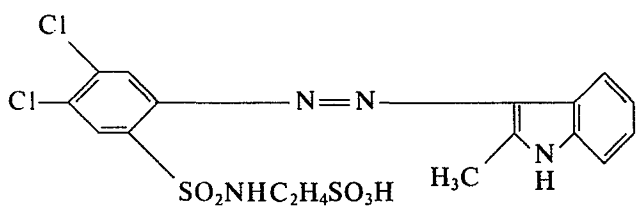

5. Use of the dyestuffs according to Claim 1 for dyeing polyamide fibres.

**Revendications**

1. Colorants azoïques de formule

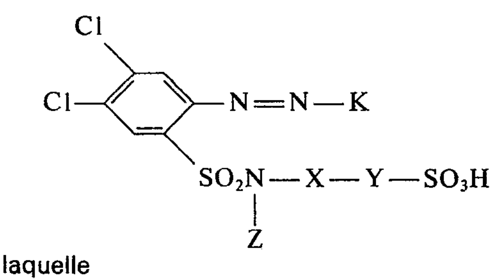

(I)

dans laquelle

K représente l'un des restes

a) 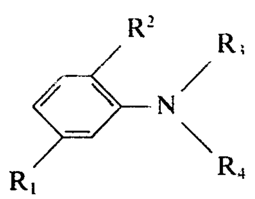

b) 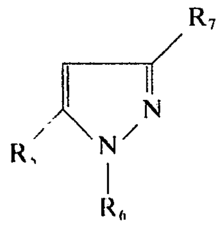

c) 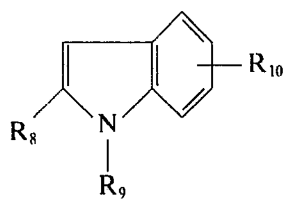

où

$R_1$ = H, $CH_3$, Cl, $NHCOCH_3$ ou $NHSO_2CH_3$,
$R_2$ = H, $OCH_3$ ou Cl,
$R_3$ = alkyle en $C_2$—$C_4$, hydroxyalkyle en $C_2$ à $C_4$, cyanéthyle, benzyle, phénéthyle ou $-C_2H_4-O-Q$,
Q = alkyle en $C_1$ à $C_4$, phényle ou cyclohexyle,
$R_4$ = H ou $R_3$,
$R_5$ = OH ou $NH_2$,
$R_6$ = alkyle en $C_1$ à $C_4$, phényle éventuellement substitué, benzyle ou phényléthyle,
$R_7$ = $CH_3$,
$R_8$ = alkyle en $C_1$à $C_4$ ou phényle,
$R_9$ = H ou alkyle en $C_1$ à $C_4$,
$R_{10}$ = H,
X = alkylène en $C_2$ à $C_4$,
Y = liaison simple,
Z = H, $CH_3$ ou $C_2H_5$.

2. Colorants azoïques suivant la revendication 1, caractérisés en ce que

$R_1$ = H ou $CH_3$,
$R_2$ = H,
$R_3$ = $C_2H_5$, $C_2H_4OH$, $C_2H_4CN$, benzyle, phénéthyle ou $C_2H_4OQ$,
$R_4$ = $R_3$ ou H,
$R_5$ = $NH_2$,
$R_6$ = alkyle en $C_1$ à $C_4$ ou phényle,
$R_7$ = $CH_3$,
$R_8$ = $CH_3$ ou phényle,
$R_9$ = H, $CH_3$ ou $C_2H_5$,
$R_{10}$ = H,
X = $C_2H_4$,
Y = liaison simple,
Z = H.

3. Colorant azoïque suivant la revendication 1 de formule

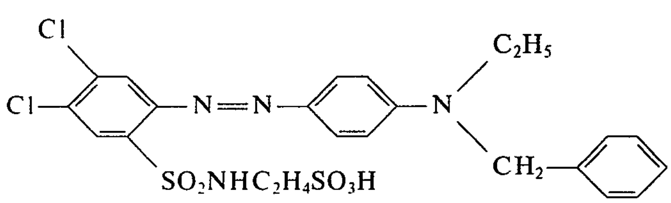

4. Colorant azoïque suivant la revendication 1, de formule

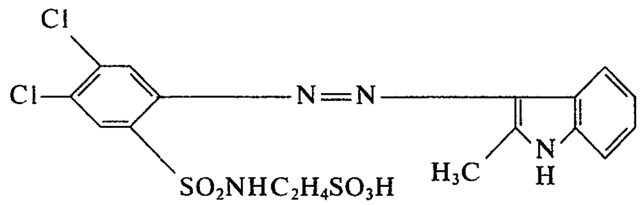

5. Utilisation des colorants suivant la revendication 1 pour la teinture de fibres en polyamide.